# EUROPEAN PATENT APPLICATION

(11) **EP 4 850 576 A1**
(43) Date of publication of application: **09.12.2026**
(21) Application number: 25181538.7
(22) Date of filing: 08.06.2025
(51) Int. Cl.: A47G 19/22, C02F 1/68, A45F 3/16

(54) **LIQUID BOTTLE**

(71) Applicant: Aquaphor International OÜ, 40231 Sillamäe (EE)
(72) Inventor: Joseph, SHMIDT, 40231 Sillamae (EE); Alexander, CHERNY, 40231 Sillamae (EE); Ivan, OGDANSKY, 40231 Sillamae (EE)
(74) Representative: Danubia Patent & Law Office LLC

(57) **Abstract**

The invention relates to a liquid bottle to provide flavor enhancement for a flow of liquid to be consumed by a user. The bottle comprises a housing (1) with an internal space, a lid (19), liquid supply means (3), a head (2) with a spout (4), compressed fluid supply means (5) and a fluid discharge valve (6). Said bottle further comprises flavor enhancement means (7) arranged in the head (2) in fluid communication with the internal space of the housing (1), wherein the flavor enhancement means (7) is configured to supply a fluid enriched with flavor, that is, aroma and/or taste, in parallel to or mixed with the flow of liquid.

## Description

The present invention relates to a liquid bottle to store and supply liquid and to achieve flavor and/or aroma enhancement. More particularly, the invention relates to an apparatus for enhancing the flavor of beverages and other consumable liquids.

### BACKGROUND

Liquid bottles of various designs with flavor enhancement are known in the prior art.

In particular, US patent application No. 20240148172 discloses a liquid bottle that comprises a housing and a head with a spout, a flavor enhancement means and a lid made as a cap. The spout consists of a tube and a mouthpiece. The mouthpiece is made with a complex shape. The head is formed with a recess for the flavor enhancement means which has openings for the inlet and outlet of liquid, as well as a channel for air. The flavor enhancement means is provided as a removable capsule which has at least one feed air inlet and at least one outlet for flavored air.

The capsule is filled with an aroma substance. The aroma substance is an aroma concentrate applied to a carrier substance. The carrier substances may be any of a foam, granules, mushroom mycelium, cellulose, cotton, rice, tea leaves, flowers, starch or other suitable organic materials. The capsule may additionally contain means for improved release of the aroma substance into the air stream passing through the capsule. For example, a wick, an electric or chemically activated heater, an ultrasonic atomizing evaporator, a fan, etc. can be used as the means for improved release of the aroma substance.

The liquid bottle according to US patent application No. 20240148172 operates as follows. The user fills the housing of the bottle with liquid, for example with water. If necessary, the user inserts an aroma capsule into the recess in the head. Simultaneously with the consumption of water, air enters the capsule through the feed air inlet. The air gets aromatized in the capsule, then exits through the outlet and a channel made in the mouthpiece into the user's mouth along with the flow of consumed liquid. The flavored air rises olfactory through the pharynx to the olfactory mucosa, where it is sensed by the receptors located there. The user perceives the aroma as a flavor additive, although it senses the aroma only via olfactory.

DE utility model application No. 202017000239 teaches a liquid bottle for the release of aroma substance. The bottle comprises a housing to store liquid and a head with a spout, an air discharge valve, and flavor enhancement means. The spout consists of a tube for the liquid, such as water and a mouthpiece. The mouthpiece has a complex shape, is removable, and replaceable. The mouthpiece has openings for the inlet and outlet of water, as well as an opening for air flow. An intermediate ring is located between the head and the housing. A cylindrical recess is provided in the upper part of the head, in which the flavor enhancement means is located. A spare flavor enhancement means is arranged in a further cylindrical recess at the base of the housing. The flavor enhancement means has openings for the inlet and outlet of the air flow. The openings for the outlet of flavored air are made of different sizes. Depending on the position of the flavor enhancement means, intensity of the aroma may be adjusted to be increased, decreased, or turn off completely. The air discharge valve prevents the formation of a vacuum inside the housing when the user drinks liquid.

The flavor enhancement means located in the head is connected by air ducts to the spout, the air discharge valve and the interior space of the bottle. The air ducts and the spout get closed when turning the head 180 degrees around its longitudinal axis. In this case, the turn angle of the head changes which lets the user know that the liquid bottle is in a closed state.

The liquid bottle disclosed in DE utility model application No. 202017000239 operates as follows. The housing of the liquid bottle is partially filled with liquid, for example water. There is an air space above the water. If necessary, the user drinks water through the spout. Simultaneously with drinking water, flavored air passes through the air ducts. Flavor reaches the user's mouth along with the water and then rises olfactory and gets sensed by the receptors. The user perceives the aroma as a flavor additive, although it feels the aroma actually only olfactory; this is due to the connection between smell and taste.

The main disadvantage of the liquid bottles according to US patent application No. 20240148172 and DE utility model application No. 202017000239 is that, to obtain a portion of water by drinking, the user should exert physical effort to suck in the liquid from the bottle, which reduces the convenience of using said liquid bottles. Moreover, the user has to also exert physical effort to create an air flow that passes through the capsule forming the flavor enhancement means. This causes discomfort when drinking from said liquid bottles takes place, especially for those who suffer from shortness of breath and/or live with decreased lung function.

US patent No. 5610674A discloses a fragrance dispenser apparatus, in one embodiment thereof, a device for dispensing flavors synchronized with visual images. Said device comprises a chair, a helmet with virtual reality glasses, headphones and a flavor dispenser that is connected to an air compressor with air pressure control mechanism and an air supply line, a breathing sensor, a controller and a flavor capsule. Here, the flavor capsule contains a porous material with flavor substances.

The device operates as follows. A person sits on the chair. The helmet with the virtual reality glasses, the headphones, the flavor dispenser and the breathing sensor are arranged on its head. Through the air supply line, compressed air is supplied to the flavor capsule in metered doses. The breathing sensor and the controller provide a signal related to breathing process that is used to supply flavor in harmony with the events occurring in virtual reality. Said device for dispensing flavors is suitable for use in theaters, computer games and virtual reality shows or in any other places where it is desirable to match the flavor with the visual and sound effects.

A disadvantage of the device according to US patent No. 5610674A lies in that it is very difficult to be operated, since said device must be synchronized with all other parameters.

A further liquid bottle is known from US Patent No. 11685593B2, regarded as the closest analogue. The liquid bottle comprises a housing for storing liquid, preferably water, a liquid supply means, a head with a spout and a lid, means for supplying compressed fluid and a fluid discharge valve. The means for supplying compressed fluid is provided by a compressor, a micro-compressor, a micropump or a pump. The fluid discharge valve is made, for example, in the form of a valve, or a microhole, or an opening with a membrane installed in it. Here, the liquid supply means can be equipped with a liquid treatment element. The liquid treatment element is provided by any of a capsule with an additive, a water filter cartridge, or a combination of a water filter cartridge and a capsule with an additive. As the additive, for example, a mineralizing substance, a medicinal product or a flavor additive can be equally used. Said additives can be present in the capsule both in the form of a solution and in the form of a suspension.

Said liquid bottle operates as follows. The user fills the housing with liquid, for example water. Then it opens the spout and turns on the means for supplying compressed fluid. Liquid/water is rising through the liquid supply means under the pressure of air pumped by supplying compressed fluid into the space inside the housing above the liquid/water level to displace liquid/water into the liquid supply means. When liquid is flowing through the liquid supply means, said liquid is treated with the liquid treatment element. That is, the liquid is filtered or/and an additive is added thereto. The means for supplying compressed fluid operates only when the user drinks water. When the user stops drinking water, it turns off the means for supplying compressed fluid. In this case, the pressure relief valve gets triggered, and the pressure drops to atmospheric. Thus, elevated pressure inside the housing is maintained only at the moments of water supply to the user.

A disadvantage of the liquid bottle according to US patent No. 11685593B2 is that the liquid treatment element (for example, the capsule with the additive or the combination of the liquid filter cartridge and the capsule with the additive) is located inside the housing. To install the liquid treatment element, the user, thus, has to perform several actions, which is not ergonomic. In addition, the user is forced to touch the parts of the bottle in contact with liquid/water with his hands, which is not hygienic. Also, the user cannot control the quantity of additives that it receives with liquid/water consumed.

The objective of the present invention and the technical result to be achieved are to develop a novel liquid bottle with increased functionality and user characteristics, namely, to ensure rapid delivery of liquid with an adjustable amount of aroma and/or flavor additives to the user.

### SUMMARY

The above objectives are achieved by constructing a liquid bottle according to claim 1 that is simple, safe and hygienic to use, as well as increases functionality and user characteristics, namely ensures the rapid delivery of liquid with an adjustable amount of flavor additives to the user. Possible further preferred embodiments of the liquid bottle are set forth in claims 2 to 16.

In particular, the liquid bottle according to the invention allows to supply a fluid enriched with flavor, for example aroma and/or taste, in parallel to or mixed with a flow of liquid to be consumed by a user. Or putting this another way, when the user consumes said flavored flow of liquid supplied by the liquid bottle, the flavor of which the user perceives in organoleptic manner, that is, through tasting, is accompanied by an aromatic/fragrance cloud exiting directly from the liquid bottle and perceived by the user through its olfactory organ.

### DRAWINGS

To clarify further the above and other advantages and features of the present invention, a more detailed description of the liquid bottle according to the invention will be rendered by reference to the drawings. The drawings described herein are only for illustrative purposes of certain preferred embodiments. In the drawings:
Figure 1 shows a first embodiment of the liquid bottle according to the invention equipped with flavor enhancement means connected to the inner space of the housing of a bottle and a fluid discharge valve.
Figure 2 shows a second embodiment of the liquid bottle according to the invention equipped with a filtration cartridge and with the flavor enhancement means connected to compressed fluid supply means.
Figure 3 shows a third embodiment of the liquid bottle according to the invention equipped with flavor enhancement means connected to the inner space of the housing of a bottle, to a fluid discharge valve and, through an adapter, to the spout.
Figure 4 shows a fourth embodiment of the liquid bottle according to the invention equipped with flavor enhancement means divided by at least one perforated partition into at least two chambers and connected to the inner space of the housing of a bottle, to a fluid discharge valve and, through an adapter, to the spout.
Figure 5 shows a fifth embodiment of the liquid bottle according to the invention equipped with flavor enhancement means divided by at least one perforated partition into at least two chambers and connected, through an adapter, to the spout and, through compressed fluid flow regulating means, to the inner space of the housing of a bottle, and to a fluid discharge valve.
Figure 6 shows a sixth embodiment of the liquid bottle according to the invention equipped with flavor enhancement means divided by at least one impermeable partition into at least two separate chambers.
Figure 7 shows a seventh embodiment of the liquid bottle according to the invention equipped with flavor enhancement means connected to a capillary formed in the liquid supply means.
Figure 8 shows an eighth embodiment of the liquid bottle according to the invention equipped with flavor enhancement means divided by at least one perforated partition into at least two chambers and connected to a capillary, to the inner space of the housing of a bottle, to a fluid discharge valve and, through an adapter, to the spout.
Figure 9 shows a nineth embodiment of the liquid bottle according to the invention equipped with flavor enhancement means connected, through a fluid outlet valve, to the inner space of the housing.
Figure 10 shows a tenth embodiment of the liquid bottle according to the invention having a rigid spout.
Figure 11 shows an eleventh embodiment of the liquid bottle according to the invention with a lid in its closed position.
Figure 11a shows an upper portion of the liquid bottle according to the invention with the lid in its closed position in detail in enlarged sectional view.
Figure 12 shows a yet further embodiment of the liquid bottle according to the invention with the lid in its closed position and with no adapter to the spout.

### DETAILED DESCRIPTION OF THE DRAWINGS

Reference will now be made in detail to various embodiments of the present invention, examples of which are illustrated in the accompanying drawings; further alternatives, modifications, and equivalents are apparent to a skilled person in the art. Furthermore, in the following detailed description, numerous specific details are set forth to provide a thorough understanding of the present invention. It is also noted that, in what follows, well-known methods, procedures, components, and circuits have not been taught in detail so as not to unnecessarily obscure certain aspects of the invention.

From now on, the term 'liquid' refers to any beverages and other consumable liquids that can be stored in the housing 1 and consumed from the liquid bottle. In general, air contains a small amount of moisture, in the form of water particles, which can change, i.e. increase, when said air enters the housing 1. Moreover, the air entering said housing can also be mixed with the liquid being present in the housing 1. Thus, from now on, the term 'fluid' refers to air that contains water or is mixed with the liquid in the housing 1. Furthermore, the term 'fluid communication' means a connection between a first location and a second location within the liquid bottle according to the invention through which either the fluid or the liquid can be transported between the two locations. It is noted here that the term 'beverages' also refers to carbonated beverages, that is, beverages enriched with carbon dioxide. In such a case, the liquid bottle can be connected to an appropriate cartridge storing carbon dioxide; said cartridge can either be an integral part of the liquid bottle or it can be provided as a separate unit, outside of the liquid bottle. Thus, the term 'fluid communication' might also refer to the transport of (compressed) carbon dioxide, too.

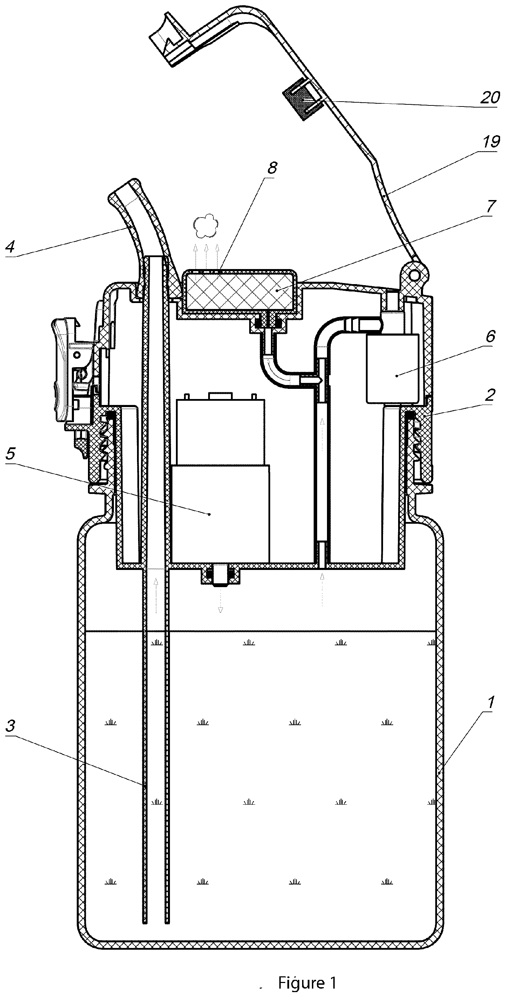

A liquid bottle shown in Figure 1, in general, contains a housing 1 with an internal space, liquid supply means 3, and a head 2 with a spout 4, a lid 19, compressed fluid supply means 5, a fluid discharge valve 6 and a flavor enhancement means 7 with inlet and outlet.

The housing 1 of the liquid bottle is made, for example, of any of plastic, glass or metal and is used to store the consumable liquid, for example, any beverages, also including water in its internal space.

The head 2 is connected to the housing by any suitable manner, for example, by means of a threaded joint to delimit the internal space of the housing 1. Connections between various parts of the head 2 is carried out directly or by means of tubes and fittings known by the skilled person in the art.

The liquid supply means 3 is a tube (Figure 1) connected to the spout 4 at one end thereof, while the other end of the tube opens into the internal space of the housing 1.

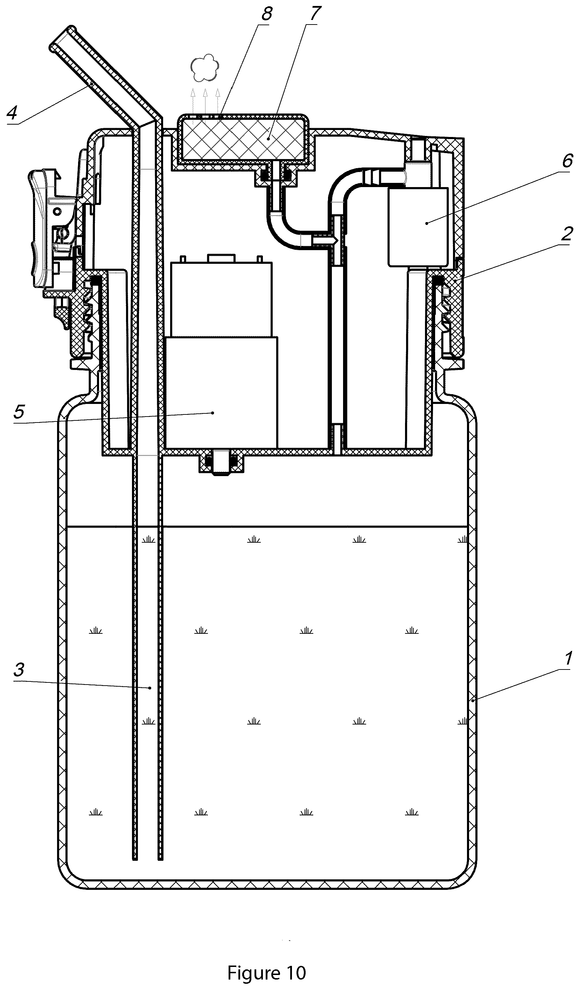

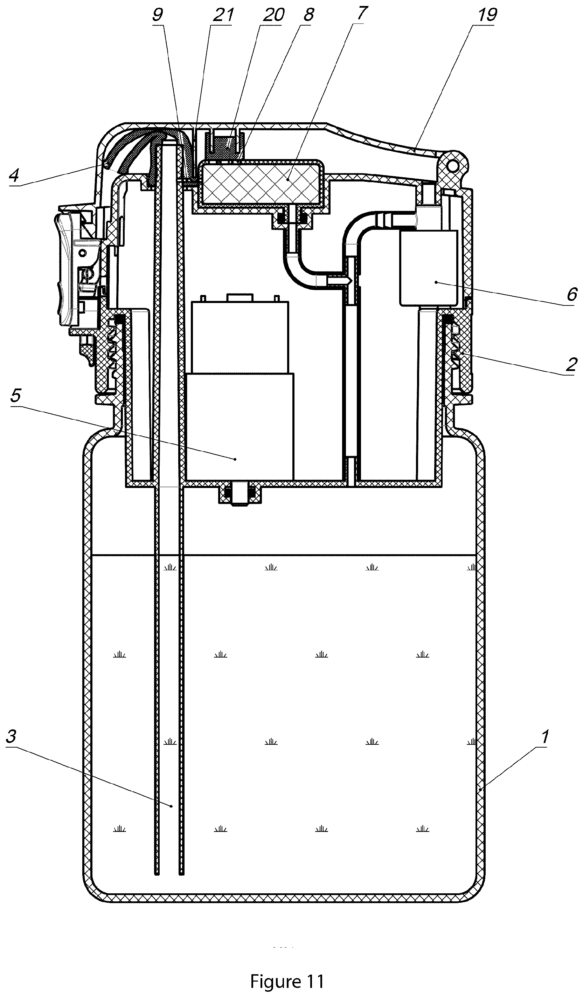

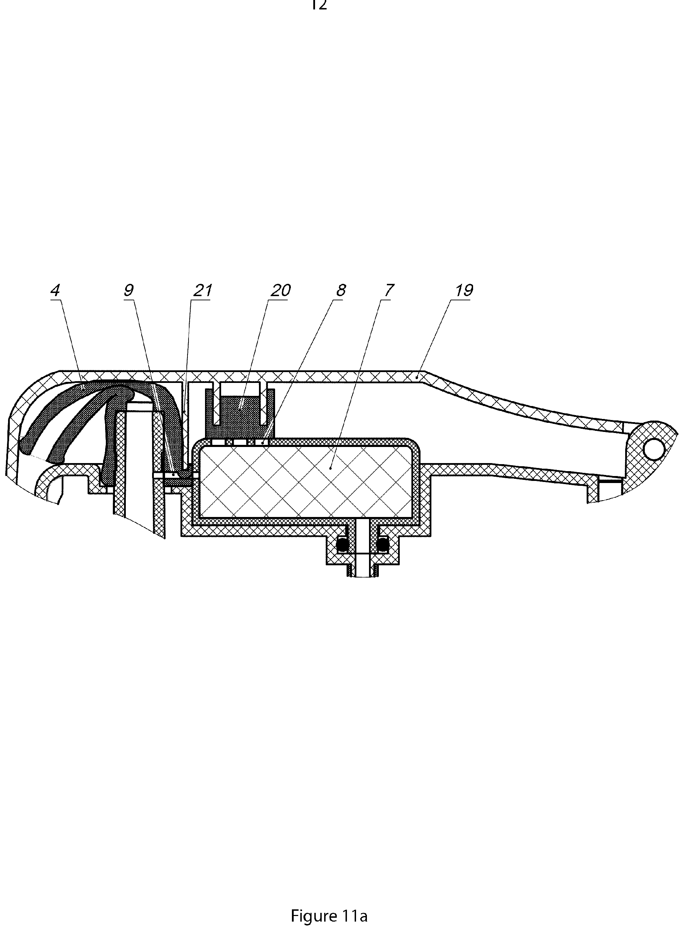

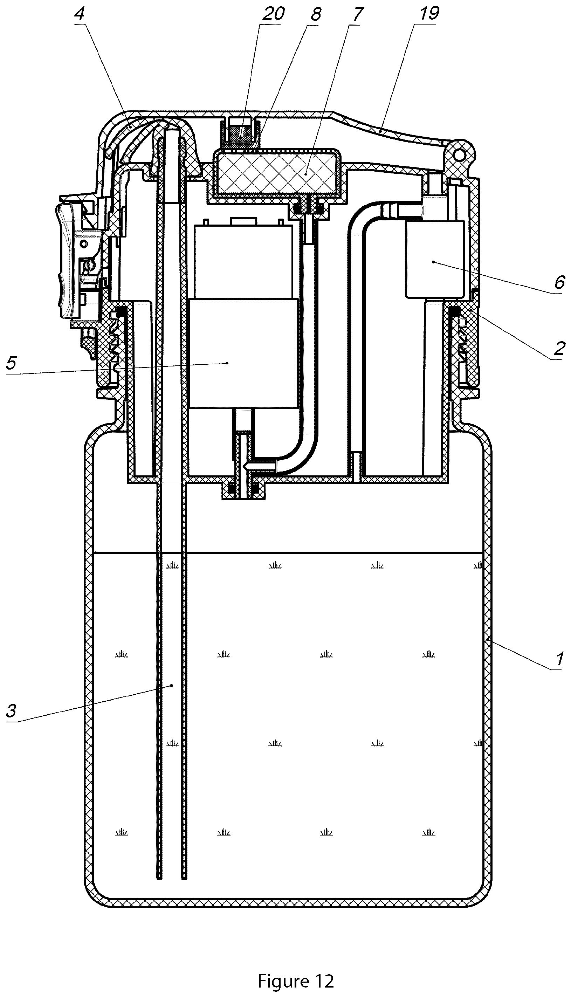

The spout 4 forms an outlet for the consumable liquid present, in operation, within the internal space of the housing 1 of the liquid bottle. The spout 4 can be made as a flexible element (as in the embodiments in Figures 1-9, 11, 11a, 12) or a rigid element (see the embodiment in Figure 10). Moreover, it can be removable from the head 2 or an integral part thereof.

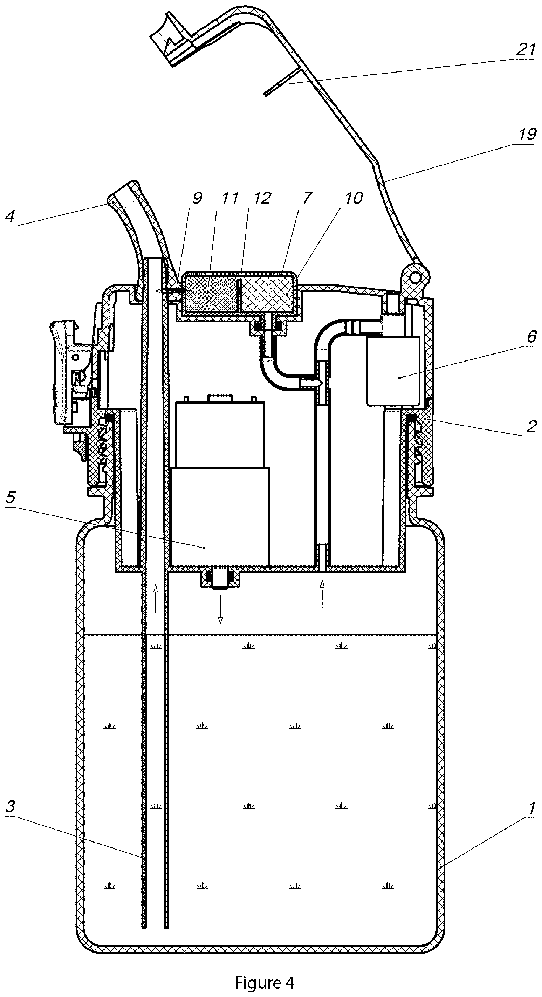

The lid 19 can be made as a flip-top lid (see Figures 1-12) or attached to the liquid bottle or fully removable and/or separable from it (e.g. in the form of a cover; not shown in the Figures). The lid 19 can be equipped with a seal 20 (see the embodiments in Figures 1, 9, 12), a projection 21 (see the embodiments in Figures 4, 5, 7, 8,) or a combined seal and projection (see the embodiments in 3, 6, 11, 11a). The seal 20 is used to close the fluid outlet openings 8 and the projection 21 is for squeezing the spout 4 when the lid 19 gets into its closed position.

The compressed fluid supply means 5 can be any of a compressor, a micro-compressor, a pump or a micropump known by the skilled person in the art. The compressed fluid supply means 5 takes air from the environment or uses some fluid from the internal space of the housing 1 of the liquid bottle.

The fluid discharge valve 6 is in fluid communication with the internal space of the housing 1 (see Figures 1-12). The fluid discharge valve 6 is provided, for example, by either a valve, e.g. a check-valve, or a perforation, or a hole with a membrane installed into it.

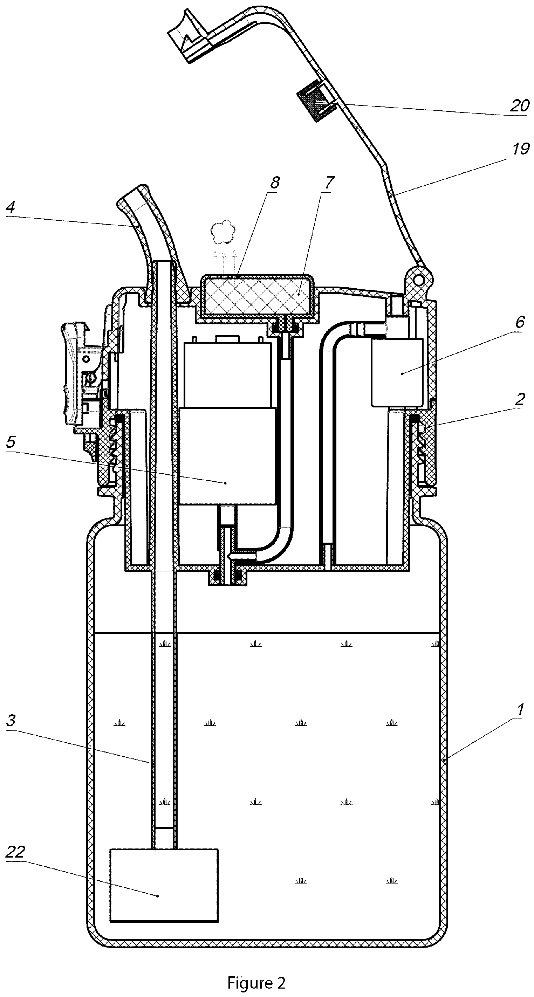

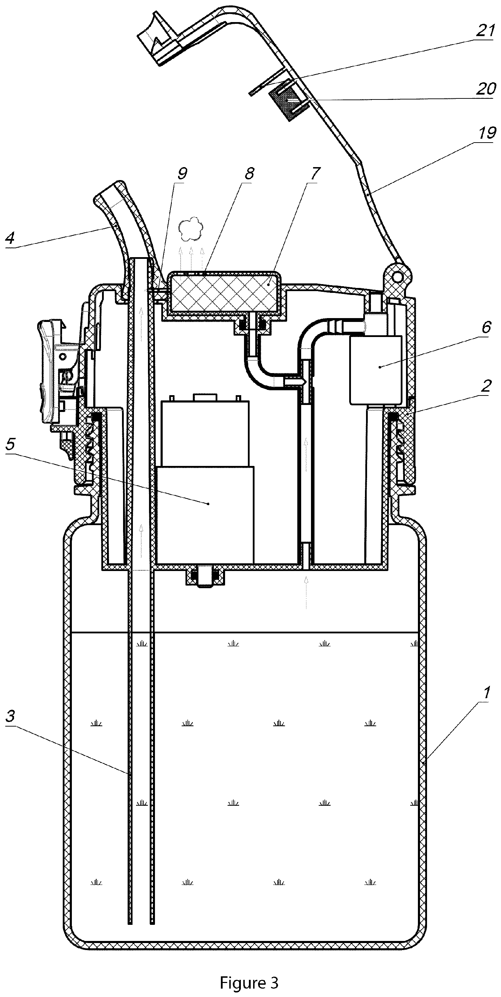

The flavor enhancement means 7 is in fluid communication with the internal space of the housing 1 and with the fluid discharge valve 6 (see the embodiments in Figures 1, 3, 4, 8, 10, 11) or with said compressed fluid supply means 5 (see further embodiments in Figures 2, 6, 12). The fluid (for example air) enters the housing 1 through the inlet of the flavor enhancement means 7 and becomes enriched in moisture or get mixed with the consumable liquid in the housing 1. In the flavor enhancement means 7, fluid outlet openings (hereinafter outlet openings 8) can be formed for the fluid leaving from the flavor enhancement means 7 (as in the case of embodiments in Figures 1-3, 9, 10, 11, 11a, 12). The flavor enhancement means 7 can be in fluid communication with the spout 4 through an adapter 9 (see the embodiments in Figures 3-8, 11, 11a) made in the form of a fluid transport channel.

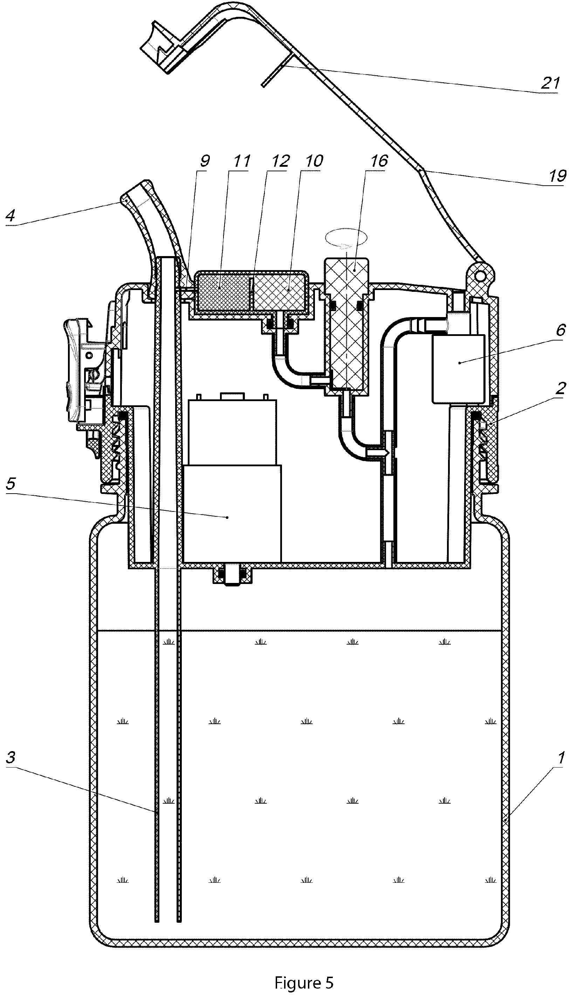

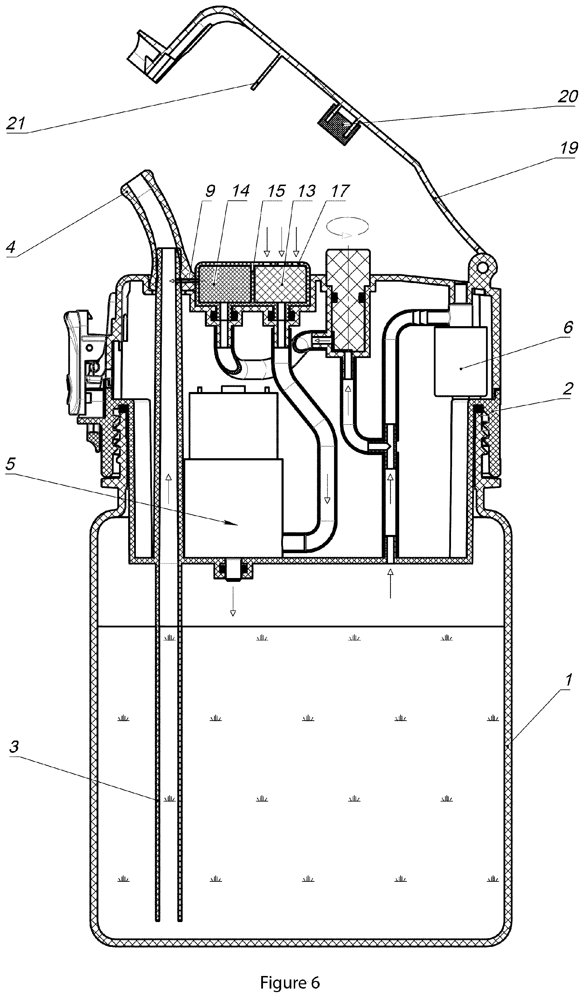

A compressed fluid flow regulating means 16 (see Figures 5 and 6) can also be installed in the head 2 of the liquid bottle, made in the form of a rotating wheel, a rotating tap or a valve (not shown in the figures). The compressed fluid flow regulating means 16 can be mechanical (Figures 5, 6) or electromechanical (not shown in the figures) in regards of its construction and/or operation. The compressed fluid flow regulating means 16 is in fluid communication with the internal space of the housing 1 of the liquid bottle (see Figures 5 and 6). The compressed fluid flow regulating means 16 is inserted into a flow path, formed by e.g. a tube, that connects the internal space of the housing 1 and the flavor enhancement means 7; said compressed fluid flow regulating means 16 is used to regulate the flow of the fluid enriched with flavor by narrowing or widening the inner cross-section of said flow path. That is, the user gets the final mixture of liquid and flavor with more or less taste and/or aroma depending on the adjusted size of said cross-section.

The flavor enhancement means 7 is divided into two chambers 10 and 11 by a perforated partition 12 (see the embodiments in Figures 4 and 5, 8). Here, chamber 10 is in fluid communication with the compressed fluid flow regulating means 16 (Figure 5). In a further embodiment, the flavor enhancement means 7 is divided and separated into two chambers 13 and 14 by an impermeable partition 15 (Figure 6). In this case, the chamber 13 is provided with inlet openings 17 for the fluid and in fluid communication with the compressed fluid supply means 5. Here, the chamber 14 is fluid communication with both the compressed fluid flow regulating means 16 and the spout 4 via the adapter 9 (Figure 6).

The flavor enhancement means 7 contains granules of an aroma substance or a spongy material impregnated with an aroma substance in liquid or gel form to aromatize/flavor the fluid exiting the flavor enhancement means 7. The aroma substance is an aroma concentrate applied to a carrier substance. The carrier substances can be any of a foam, granules, mushroom mycelium, cellulose, cotton, rice, tea leaves, flowers, starch or other suitable organic materials.

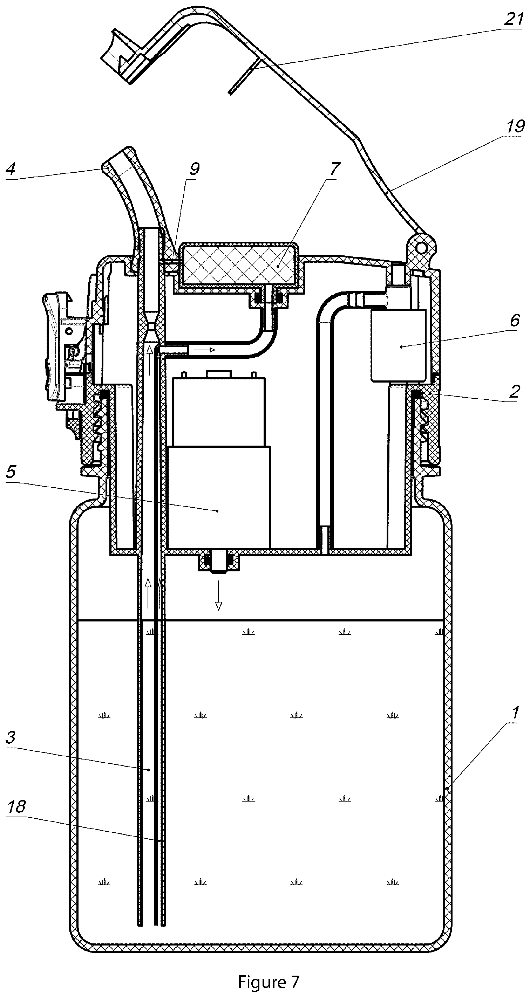

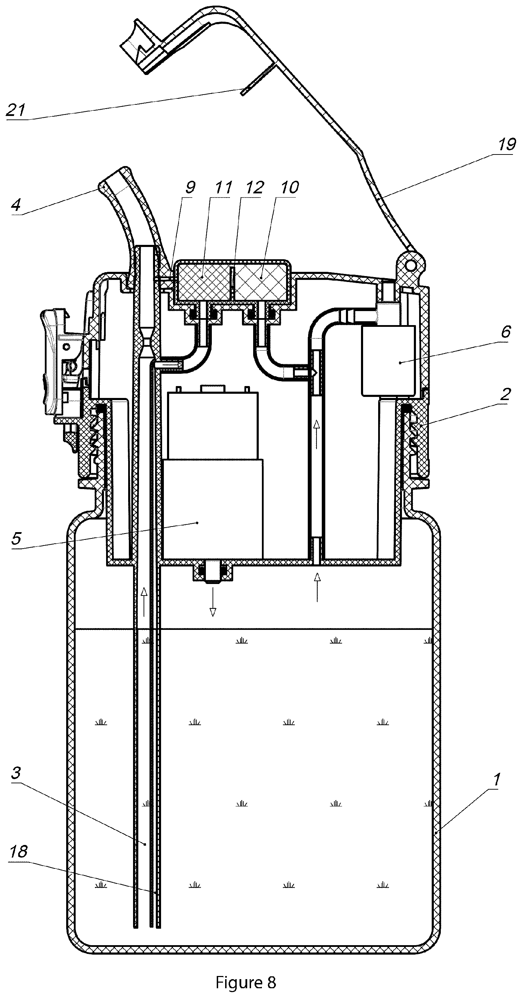

The liquid bottle can also contain a capillary 18. The capillary 18, extending preferably to the bottom of the housing 1, can be formed in or inserted into the liquid supply means 3. In some embodiments (see Figures 7 and 8), the flavor enhancement means 7 is in fluid communication to the capillary 18 to supply aromatized/flavored fluid to the liquid thereby enhancing the flavor the liquid when consumed.

In one of the embodiments (Figure 7), cross-section of the liquid supply means 3 is made to narrow at a point above the junction of the capillary 18 with the liquid supply means 3 and then it widens closer to the spout 4.

In a further embodiment (Figure 8), the chamber 10 of the flavor enhancement means 7 is in fluid communication with the internal space of the housing 1, while the chamber 11 is in fluid communication with the capillary 18 and, through the adapter 9, with the spout 4.

Additionally, the liquid bottle can be provided with a liquid treatment element 22 (see Figure 2). The liquid treatment element 22 is made in the form of any of a capsule with an additive, as a filter cartridge to filter the liquid, preferably water, to be filled into the housing 1, or a combination of a filter cartridge and a capsule with the additive.

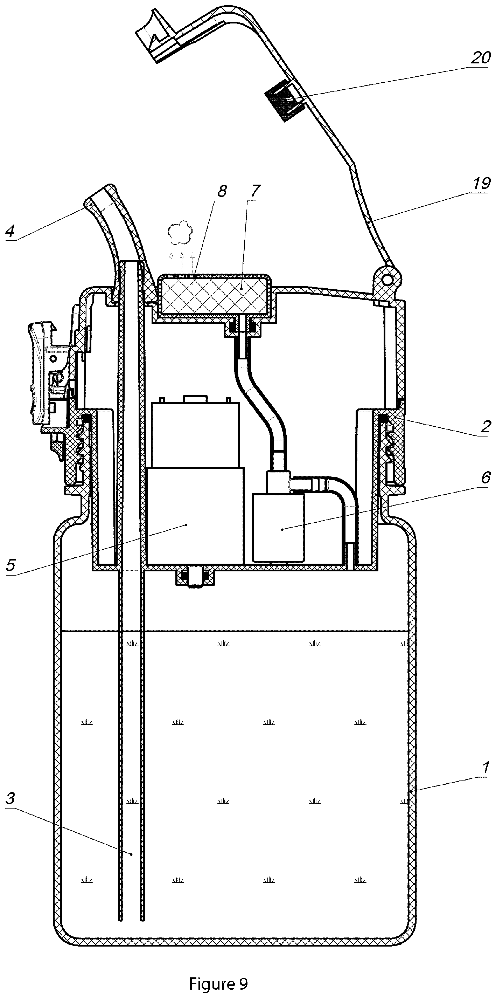

In a yet further embodiment (Figure 9), the flavor enhancement means 7 is in fluid communication with the internal space of the housing 1 through the fluid discharge valve 6.

The liquid bottle according to the invention operates as follows. The user removes the head 2 of the liquid bottle and fills the internal space of the housing 1 with liquid, for example, with water or a beverage (such as e.g. tea, coffee, etc.). Then the user closes the housing 1 of the liquid bottle with the head 2. If the user needs some liquid for any purpose, e.g. for drinking, it activates the compressed fluid supply means 5. Upon its activation, the compressed fluid supply means 5 begins to provide a fluid flow into the internal space of the housing 1 above the surface of the liquid within the housing 1. A part of the compressed fluid flow forces the liquid to enter the liquid supply means 3. The rest of the compressed fluid flow-enters the elements of the head 2 of the liquid bottle. That is, fluid enters the flavor enhancement means 7, gets flavored/aromatized there and then, through the outlet openings 8, exits towards the user (see Figures 1-5, 7-12).

If the flavor enhancement means 7 is in fluid communication with the spout 4 through the adapter 9, the fluid enters the spout 4, and mixes with the liquid flow, and then it goes to the user (see Figures 3-8, 11, 11a).

If the flavor enhancement means 7 contains the perforated partition 12, the fluid sequentially passes through the chambers 10 and 11 and then, through the spout 4, goes the user (see Figures 4 and 5). In this case, depending on the content of the chambers 10 and 11 of the flavor enhancement means 7, double enrichment with aroma and/or taste can be achieved.

If the head 2 of the liquid bottle also comprises the compressed fluid flow regulating means 16, supply of the compressed fluid is regulated (see Figures 5, 6). If the control means used in the compressed fluid flow regulating means 16 is mechanical, supply of the compressed fluid is regulated by the user manually, Alternatively, if said control means is electromechanical, that is, for example, in the form of an electromechanical valve, the regulation takes place automatically at certain intervals.

If the flavor enhancement means 7 contains the impermeable partition 15, different additives can be arranged in the chambers 13 and 14. A solid aroma additive can be placed in chamber 13, in communication with the compressed fluid supply means 5, and, for example, a liquid or gel-like additive can be placed in the chamber 14 which is in communication with the spout 4. In this case, the fluid passes through the inlet openings 17 into the chamber 13, gets enriched with aroma, and enters the compressed fluid supply means 5 and from that into the internal space of the housing 1. Then, from the internal space of the housing 1, the compressed fluid enters the compressed fluid flow regulating means 16 and then into the chamber 14, gets additionally enriched with a flavor additive and then exits to the user through the spout 4 (see Figure 6).

If the flavor enhancement means 7 is in fluid communication with the capillary 18, under the action of the compressed fluid, the liquid rises not only through the liquid supply means 3, but a small amount thereof also rises through the capillary 18, passes through the flavor enhancement means 7 and enters the spout 4 through the adapter 9 (Figure 7).

If the chamber 10 of the flavor enhancement means 7 is in fluid communication with the internal space of the housing 1, and the chamber 11 is also in fluid communication with the capillary 18, the compressed fluid from the internal space of the housing 1 enters the chamber 10, passes through it and gets flavored/aromatized, then exits to the chamber 11, into which the liquid enters through the capillary 18. Thus, in the chamber 11, the flavored/aromatized fluid and the liquid mix together, the obtained mixture gets further flavored/aromatized, and then the mixture of aroma and taste enters, through the adapter 9, into the spout 4, where mixes with the main flow of liquid and enters the user (Figure 8).

When the user no longer requires liquid, it switches off the compressed fluid supply means 5, whereby the compressed fluid remaining inside the internal space of the head 2 is discharged through the fluid discharge valve 6. The user closes the lid 19, thereby the seal 20 closes the inlet openings 17 formed in the flavor enhancement means 7 and the projection 21 squeezes the adapter 9. In addition, if the spout 4 is a flexible element, it gets squeezed by the inner surface of the lid 19 (this design is described in more detail in International Publication Pamphlet No. WO202420144 A1).

Unlike the closest analogue, the liquid bottle according to the invention allows the user to obtain a liquid enriched with flavor, for example, aroma and/or taste. In addition, the supply of aroma and/or flavor additive can be performed in a controlled way, by means of using the compressed fluid flow regulating means.

As is clear for a skilled person in the art, with a view to the above teaching, numerous other practical embodiments of the above-discussed inventive concept can be constructed with many modifications and variations. The embodiments discussed hereby in detail are thus only preferred exemplary embodiments.

## Claims

1. A liquid bottle to provide flavor enhancement for a flow of liquid to be consumed by a user, comprising a housing (1) with an internal space, a lid (19), liquid supply means (3), a head (2) with a spout (4), compressed fluid supply means (5), and a fluid discharge valve (6), **characterized in that** the liquid bottle further comprises flavor enhancement means (7) arranged in the head (2) in fluid communication with the internal space of the housing (1), wherein the flavor enhancement means (7) is configured to supply a fluid enriched with flavor, that is, aroma and/or taste, in parallel to or mixed with the flow of liquid.

2. The liquid bottle according to claim 1, **characterized in that** the flavor enhancement means (7) is formed with outlet openings (8) for supplying the fluid enriched with flavor in parallel to the flow of liquid.

3. The liquid bottle according to any of claims 1 and 2, **characterized in that** the flavor enhancement means (7) is in fluid communication with the spout (4) through an adapter (9).

4. The liquid bottle according to any of claims1 to 3, **characterized in that** the liquid bottle further comprises a compressed fluid flow regulating means (16) installed in the head (2).

5. The liquid bottle according to claim 4, **characterized in that** the flavor enhancement means (7) is in fluid communication with the internal space of the housing (1) through the compressed fluid flow regulating means (16).

6. The liquid bottle according to any of claims 1 to 5, **characterized in that** the flavor enhancement means (7) is divided into at least two chambers (10, 11) by at least one perforated partition (12).

7. The liquid bottle according to any of claims 1 to 5, **characterized in that** the flavor enhancement means (7) is divided into at least two chambers (13, 14) by at least one impermeable partition (15).

8. The liquid bottle according to claim 7, **characterized in that** the compressed fluid supply means (5) is in fluid communication with one of the chambers (13), while a second chamber (14) is in fluid communication with the spout (4) and the compressed fluid flow regulating means (16).

9. The liquid bottle according to claim 8, **characterized in that** the chamber (13) of the flavor enhancement means (7) in fluid communication with the compressed fluid supply means (5) is formed with inlet openings for the fluid.

10. The liquid bottle according to any of claims 1 to 9, **characterized in that** the flavor enhancement means (7) is a capsule with a flavor additive.

11. The liquid bottle according to any of claims 1 to 10, **characterized in that** the liquid supply means (3) contains a capillary (8).

12. The liquid bottle according to claim 11, **characterized in that** the flavor enhancement means (7) is in fluid communication with the capillary (8) and the spout (4) through an adapter (9).

13. The liquid bottle according to claim 12, **characterized in that** the flavor enhancement means (7) is in fluid communication with the capillary (8), with the internal space of the housing (1), and - through the adapter (9) - with the spout (4).

14. The liquid bottle according to any of claims 1 to 13, **characterized in that** the flavor enhancement means (7) contains either granules of an aromatic substance or a spongy material impregnated with a gel of an aromatic substance.

15. The liquid bottle according to any of claims 1 to 13, **characterized in that** the flavor enhancement means (7) contains capsules with an aromatic substance in liquid or gel form, or in solid phase.

16. The liquid bottle according to any of claims 2, 3, and 10, **characterized in that** the lid is designed to cover the outlet of the compressed fluid, the inlet of the fluid, and the adapter (9).
